Europäisches Patentamt

European Patent Office

Office européen des brevets

(11) Veröffentlichungsnummer: **0 403 039**
**A1**

## (12) EUROPÄISCHE PATENTANMELDUNG

(21) Anmeldenummer: **90250139.4**

(51) Int. Cl.5: **E21D 7/00, F16L 3/18**

(22) Anmeldetag: **30.05.90**

(30) Priorität: **16.06.89 DE 3920174**

(43) Veröffentlichungstag der Anmeldung:
**19.12.90 Patentblatt 90/51**

(84) Benannte Vertragsstaaten:
**BE DE ES FR**

(71) Anmelder: **MANNESMANN Aktiengesellschaft**
**Mannesmannufer 2**
**D-4000 Düsseldorf 1(DE)**

(72) Erfinder: **Stamm, Friedel**
**Schlickumer Weg 7**
**D-4006 Erkrath(DE)**
Erfinder: **Heinrichs, Rainer**
**Bonnusstrasse 13**
**D-4570 Quakenbrück(DE)**

(74) Vertreter: **Meissner, Peter E., Dipl.-Ing. et al**
**Patentanwaltsbüro Meissner & Meissner,**
**Herbertstrasse 22**
**D-1000 Berlin 33(DE)**

(54) **Abfangvorrichtung zum sicheren Abfangen einer in einem Bergwerksschacht freihängenden Rohrleitung.**

(57) Die Erfindung betrifft eine Abfangvorrichtung zum sicheren Abfangen einer in einem Bergwerksschacht freihängenden Rohrleitung, die über Verlagerungselemente an der Schachtwand befestigt ist.

Um ein unkontrolliertes Herabfallen eines abgerissenen Rohrleitungsabschnittes sicher zu verhindern, ist auf der Verlagerung (6) ein Ring (4) mit nach unten hin sich verjüngender konischer Bohrung (7) vorgesehen, der mit einem aus Segmenten (8, 9, 10) gebildeten Klemmring zusammenwirkt, dessen Innenflächen zylindrisch und dessen Außenflächen der Bohrung des Ringes (4) konisch angepaßt ist. Ferner ist oberhalb des Klemmringes ein das Rohr (1) kraftschlüssig umfassender Anschlag (22, 22') vorgesehen, der im Abfangefall die Segmente des Klemmringes in den Ring (4) drückt.

Fig.1

EP 0 403 039 A1

# Abfangevorrichtung zum sicheren Abfangen einer in einem Bergwerksschacht freihängenden Rohrleitung

In einem Bergwerk werden für den Abbau untertägig lagernder fester Bodenschätze, wie z.B. Kohle oder Erze, für die Bewetterung, die Kühlung und den Antrieb von Maschinen und Hilfsaggregaten verschiedene Arten von Gasen und Flüssigkeiten benötigt. Diese müssen vom abseits des Hauptschachtes sich befindenden Reservoir bis an die Verbraucherstelle vor Ort transportiert werden. Desweiteren fällt bei der mechanischen Aufbereitung der abgebauten Bodenschätze in größeren Mengen taubes Gestein an. Dieses kann einmal über Tage auf Halde gelagert oder als sogenannter Bergversatz in die Stollen des Bergwerkes eingebracht werden, um die ausgebeuteten Hohlräume wieder aufzufüllen. Für den Transport der Gase, Flüssigkeiten und Feststoffe war es bisher üblich, im Haupt- bzw. Blindschacht eine aus Flanschenrohren bestehende Rohrleitung zu verlegen. Die Nachteile einer solchen Leitung sind darin zu sehen, daß für die weit ausladenden Flansche ein ausreichender Freiraum im Verlegebereich vorhanden sein muß und das Verbinden bzw. das Lösen der beiden Flansche an der Verbindungsstelle entsprechend Zeit in Anspruch nimmt.

In neuerer Zeit (Prospekt der Fa. Mannesmann Röhrenwerke "Mannesmannölfeldrohre für freihängende Leitungen in Bergwerksschächten"; Eingang im Patentamt am 23. Mai 1989, 6 Seiten) ist man deshalb dazu übergegangen, in den vertikal verlaufenden Schächten statt der Flanschenrohre Gewinderohre zu verwenden, die mittels einer Muffe miteinander verschraubt werden. Die daraus gebildete Rohrleitung wird freihängend im Schacht angeordnet, wobei das Gewicht der Rohrleitung einschließlich der Füllung an einer am Schachtanfang angeordneten Verlagerung abgefangen wird. Aus Gründen der Sicherheit wird für den Einbau solcher freihängenden Rohrleitungen von den Genehmigungsbehörden verlangt, daß für den bisher nicht eingetretenen, aber theoretisch denkbaren Fall eines Abrisses der Rohrleitung Vorsorge getroffen wird, daß die freihängende Rohrleitung nicht unkontrolliert herabfallen kann und damit den Schacht beschädigen und möglicherweise auch Menschenleben gefährden könnte.

Aufgabe der Erfindung ist es, eine Abfangevorrichtung zum sicheren Abfangen einer in einem Bergwerksschacht freihängenden Rohrleitung zu schaffen, mit dem ohne Behinderung der während des Betreibens sich ergebenden Dehnung der Rohrleitung ein unkontrolliertes Herabfallen eines abgerissenen Rohrleitungsabschnittes sicher verhindert wird.

Diese Aufgabe wird mit den im kennzeichnenden Teil des Anspruches 1 angegebenen Merkmalen gelöst. Vorteilhafte Ausgestaltungen ergeben sich aus den Unteransprüchen.

Das Konzept der vorgeschlagenen Sicherheitsfangvorrichtung besteht darin, die im freien Fall zurückgelegte Wegstrecke und damit eine das Gefährdungspotential erhöhende Beschleunigung eines abgerissenen Rohrleitungsabschnittes auf ein Minimum zu reduzieren. Dies wird dadurch erreicht, daß ein in axialer Richtung verstellbarer geteilter Anschlag in einem vorgegebenen Abstand zu einem die Abbremsung bewirkenden keilförmigen Klemmelement angeordnet und kraftschlüssig mit dem Rohr verbunden wird, wobei das Klemmelement mit einem auf einer Verlagerung angeordneten dehnbaren Ring zusammenwirkt. Das ringförmige Klemmelement, das eine zylindrische Innen- und eine konische Außenfläche aufweist, kann als eine in Längsrichtung geschlitzte Kegelhülse oder als sich aus mehreren Segmenten zusammengesetzte Buchse ausgebildet sein.

Der einstellbare Abstand zwischen Anschlag und Klemmelement wird so gewählt, daß die maximal auftretende Dehnung infolge Erwärmung und Füllung der Rohrleitung nicht behindert wird. In der praktischen Anwendung bedeutet dies, daß man die Rohrleitung nach dem Einbau sozusagen "aushängen" läßt, bis die elastische Dehnung infolge des Eigengewichtes der Rohrleitung ihr Maximum erreicht hat. Zusätzlich wird man einige Zeit warten, bis die Temperaturverhältnisse im Schacht sich stabilisiert haben und nur die übliche geringe Schwankungsbreite aufweisen. Die dann sich ergebende Länge der Rohrleitung ist sozusagen das Nullmaß für die Anordnung des Anschlages, d.h. der Anschlag sitzt auf der obenliegenden Stirnseite des Klemmelementes auf. Ausgehend von dieser Lage wird über Berechnung und durch Messung ermittelt, wie groß die unter Betrieb sich einstellende zusätzliche Dehnung infolge Erwärmung und Füllung der Rohrleitung ist. Um dieses Maß muß der Anschlag entfernt von der oberen Stirnfläche des Klemmelementes an der Rohrleitung angeklemmt werden, wobei man noch einen gewissen Sicherheitsabstand dazurechnen muß.

Da der Durchmesser der Innenfläche des Klemmelementes etwas größer ist als der Außendurchmesser der Rohrleitung, kann sich die Rohrleitung innerhalb des Abstandes zwischen Anschlag und Klemmelement frei dehnen. Bei der Ausbildung des Klemmelementes als Kegelhülse muß diese schon vor dem Einbau der Rohrleitung auf dem entsprechenden Rohr augeschoben werden. Der Vorteil dabei ist, daß wie eine Feder aufspringende Kegelhülse beim Einstecken in den Ring sich selbst zentriert und bei der Bewegung der Rohrleitung infolge der sich ändernden Dehnung nicht mitgezogen werden kann. Dagegen muß bei einer Ausbildung des Klemmelementes in Form ringförmiger Segmente diese entsprechend gesichert werden. Dazu wird weiterbildend vorgeschlagen, für eine Fixierung nach unten Scherstifte in die Segmente einzuschlagen und für eine Fixierung nach oben einen verschiebbaren Stift, der gegen in einer Bohrung des Segmentes angeordneten Feder glattbündig eindrückbar ist. Auf diese Weise können die Segmente nach dem Einbau der Rohrleitung in den auf einer Verlagerung angeordneten Ring eingeschoben werden, wobei nach Überschreiten der unteren Stirnfläche des Ringes die eingedrückten Stifte herausspringen würden und damit eine Fixierung für die Bewegung nach oben bilden. Die oberen Stifte können anschließend nach dem Einstecken der Segmente eingeschlagen werden, wobei sie so ausgelegt sind, daß sie beim Auftreffen des Anschlages auf die Segmente abgeschert werden. Der ungehinderte Einbau der Rohrleitung bei einer schon im Schacht befestigten Verlagerung mit dem darauf angeordneten Ring wird dadurch ermöglicht, daß der kleinste Bohrungsdurchmesser des Ringes immer größer ist als der äußere Durchmesser der Muffe, so daß die einzuhängende Leitung ungehindert durch den Ring herabgelassen werden kann.

Die Abbremsung des herabfallenden Rohrleitungsabschnittes erfolgt in der Weise, daß der Anschlag auf die obere Stirnfläche des Klemmelementes auftrifft und dieses in den eine konische Bohrung aufweisenden Ring hineindrückt. Dabei wird der Ring gedehnt, wobei die Abmessung und das Elastizitätsverhalten des Ringes so aufeinander abgestimmt sind, daß im ungünstigsten Falle das Gesamtgewicht der Rohrleitung einschließlich der Füllung durch eine elastische oder plastische Verformung des Ringes ohne Bruch aufgenommen wird. Nun ist es vorstellbar, daß die Reibungskräfte des an der Rohrleitung angeklemmten Anschlages nicht ausreichen, um die Gesamtkräfte infolge des Gewichtes und der bis dahin auf dieser Wegstrecke entstandenen Fallbeschleunigung des abgerissenen Rohrleitungsabschnittes aufzunehmen und der Anschlag zu rutschen anfängt. In einem solchen Falle wird die Leitung aber trotzdem stark abgebremst, da das Klemmelement schon etwas in den Ring eingedrückt ist und an der Rohraußenoberfläche zur Anlage kommt und der rutschende Anschlag auch zum Energieverzehr beiträgt. Die sich dann ergebende Rutschstrecke wird begrenzt durch die dem Anschlag folgende Muffe, die dann das Klemmelement über den Anschlag in den ungeteilten Ring eindrücken würde, so daß damit die Abwärtsbewegung zum Stillstand kommt. Zur Verstärkung des Reibungsschlusses zwischen dem Klemmelement und der Rohraußenoberfläche wird weiterhin vorgeschlagen, die Innenoberfläche des Klemmelementes mit einem Profil zu versehen.

Der Vorteil des vorgeschlagenen Verfahrens liegt darin, daß die den herabfallenden Rohrleitungsabschnitt abbremsende Klemmung durch den sich abwärts bewegenden Rohrleitungsabschnitt selbst ausgelöst wird und die Energie der beschleunigten Massen in einfacher Weise durch eine elastische oder plastische Verformung eines Ringes ohne Bruch vernichtet wird. Ein weiterer Vorteil ist darin zu sehen, daß durch den in axialer Richtung verstellbaren Anschlag die im freien Fall bis zum Einsetzen der Klemmung zurückgelegte Wegstrecke auf ein Minimum reduziert wird, so daß die bis dahin sich einstellende Geschwindigkeit für den sich abwärts bewegenden abgerissenen Rohrleitungsabschnitt beherrschbar bleibt. Eine zusätzliche Sicherung ist dadurch gegeben, daß auch ein rutschender Anschlag eine Abbremsung bewirkt und die dem Anschlag folgende Muffe den endgültigen Stillstand der Abwärtsbewegung auslöst.

Es soll an dieser Stelle nicht unerwähnt bleiben, daß ein seitliches Hineinfallen der Leitung zur Mitte des Schachtes hin dadurch verhindert wird, daß unabhängig von der Sicherheitsfangvorrichtung in bestimmten Abständen Haltebügel an der Schachtwand angeordnet sind, um ein mögliches Ausknicken der Rohrleitung zu verhindern.

Bei Längen freihängender Rohrleitungen im Bereich bis zu 1000 m wird es ausreichend sein, eine solche Sicherheitsfangvorrichtung am Angang der Rohrleitung, d.h. am Schachtende bsw. Sohlenende anzuordnen. Bei längeren Rohrleitungen wird man sicherheitshalber eine weitere Sicherheitsfangvorrichtung vorsehen. Der Abstand des Anschlages zu dem Klemmelement für die weiter oben liegende Sicherheitsfangvorrichtung muß den dort herrschenden Dehnverhältnissen der Rohrleitung angepaßt werden. Statt der Anordnung einer weiteren Sicherheitsfangvorrichtung ist es auch möglich, statt dessen die bei längeren freihängenden Rohrleitungen übliche Strangentlastungsvorrichtung (P 38 22 768.1) als Sicherheitsfangvorrichtung zu verwenden.

In der Zeichnung werden anhand eines Ausführungsbeispieles das erfindungsgemäße Verfahren und die Vorrichtung näher erläutert. Es zeigen:

Figur 1 einen Längsschnitt entlang der Linie BB in Figur 2

Figur 2 einen Querschnitt entlang der Linie AA in Figur 1.

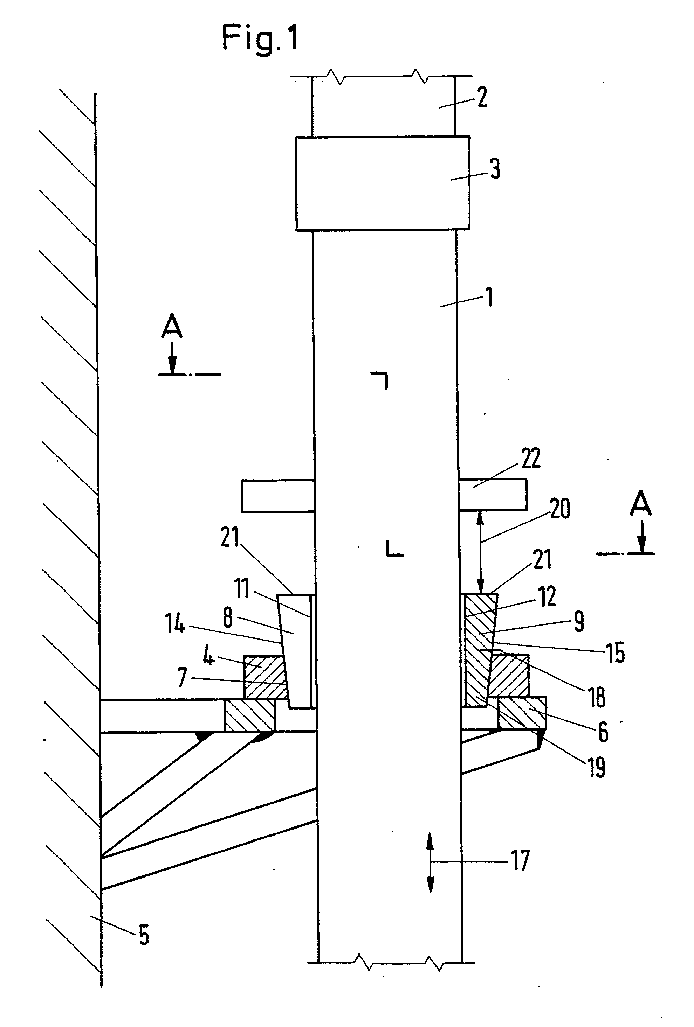

Figur 1 zeigt einen Abschnitt der frei in einem Bergwerksschacht hängenden Rohrleitung mit zwei über eine Muffe 3 verbunden Rohren 1, 2. Die Vorrichtung zum sicheren Abfangen eines abgerissenen Rohrleitungsabschnittes, wobei im Falle eines Abrisses im Bereich der Aufhängig die Länge des abgerissenen Rohrleitungsabschnittes der gesamten freihängenden Rohrleitung entsprechen würde, besteht aus einem ungeteilten Ring 4, der auf einer an der Schachtwand 5 angeordneten Verlagerung 6 befestigt ist. Die Art der Befestigung des Ringes 4 auf der Verlagerung 6 wurde aus Vereinfachungsgründen hier weggelassen. Der Ring 4 weist eine konische Bohrung 7 auf, in die keilförmig ausgebildete Segmente 8, 9, 10 eingesteckt sind. Jedes Segment 8, 9, 10 hat eine zylindrisch ausgebildete Innenfläche 11, 12, 13 und eine komplementär zur Bohrung des Ringes 4 ausgebildete konische Außenfläche 14, 15, 16. Im Ruhezustand ist die Einstecktiefe der Segmente 8, 9, 10 mindestens gleich der Dicke des Ringes 4. Damit die Rohrleitung sich infolge Erwärmung und Füllung ungehindert ausdehnen kann, hier durch den Pfeil 17 symbolisiert, ist der Durchmesser der zylindrischen Innenfläche 11, 12, 13 der Segmente 8, 9, 10 etwas größer als der äußere Durchmesser des durch den Ring 4 sich erstreckenden Rohres 1. Die unbeabsichtigte Mitnahme der Segmente 8, 9, 10 bei der Ausdehnung 17 der Rohrleitung wird durch entsprechend angeordnete Stifte 18, 19 verhindert. In einem festgelegten Abstand 20 zur Oberkante 21 der Segmente 8, 9, 10 wird am Rohr 1 ein Anschlag 22, 22' festgeklemmt. Dabei entspricht der Abstand 20 der auftretenden zusätzlichen Dehnung der Rohrleitung infolge Erwärmung und Füllung.

Kommt es ausgelöst durch eine kurzzeitige Überbeanspruchung oder durch einen nicht entdeckten Material- oder Herstellungsfehler zu einem Abriß eines Rohrleitungsabschnittes, dann tritt die im Anfangsbereich der Rohrleitung, d.h. am Schachtende bzw. am Ende der Sohle angeordnete Fangvorrichtung in Aktion. Bei der Abwärtsbewegung des abgerissenen Rohrleitungsabschnittes schlägt der Anschlag 22, 22' auf die Oberkante 21 der Segmente 8, 9, 10 auf, wobei zuerst die die Segmente 8, 9, 10 fixierenden Stifte 18 weggeschert werden. Beim weiteren Abwärtsgleiten werden die Segmente 8, 9, 10 weiter in den Ring 4 hineingedrückt, der dabei elastisch oder plastisch aufgeweitet wird. Dabei kommen die Innenflächen 11, 12, 13 der Segmente 8, 9, 10 an der Außenoberfläche des Rohres 1 zur Anlage und erzeugen eine der Abwärtsbewegung entgegengerichtete Reibungskraft.

Diese Reibungskraft nimmt mit dem weiteren Hineindrücken der Segmente 8, 9, 10 in den Ring 4 rasch zu, so daß nach kurzer Wegstrecke der sich abwärts bewegende Rohrleitungsabschnitt zum Stillstand kommt. Dadurch wird verbindert, daß der abgerissene Rohrleitungsabschnitt mit Fallbeschleunigung sich nach unten bewegt und die dann schwer abzubremsende beschleunigte Masse den Schacht beschädigen und möglicherweise auch Menschenleben gefährden könnte. Auch für den Fall, daß die am Anschlag 22, 22' wirkenden Klemmkräfte nicht ausreichen sollten, das fallende Gewicht des abgerissenen Rohrleitungsabschnittes zu übertragen und es zu einem Rutschen des Anschlages 22, 22' kommt, wird der sich abwärts bewegende Rohrleitungsabschnitt trotzdem abgebremst, da die Segmente 8, 9, 10 durch den Aufschlag schon ein kleines Stück in den Ring 4 hineingedrückt worden sind. Bei dem sich fortsetzenden Rutschvorgang würde nach einer bestimmten Wegstrecke die nächstfolgende Muffe 3 auf den Anschlag 22, 22' und damit auf die Oberkante 21 der Segmente 8, 9, 10 drücken und danach die Rutschbewegung endgültig abstoppen.

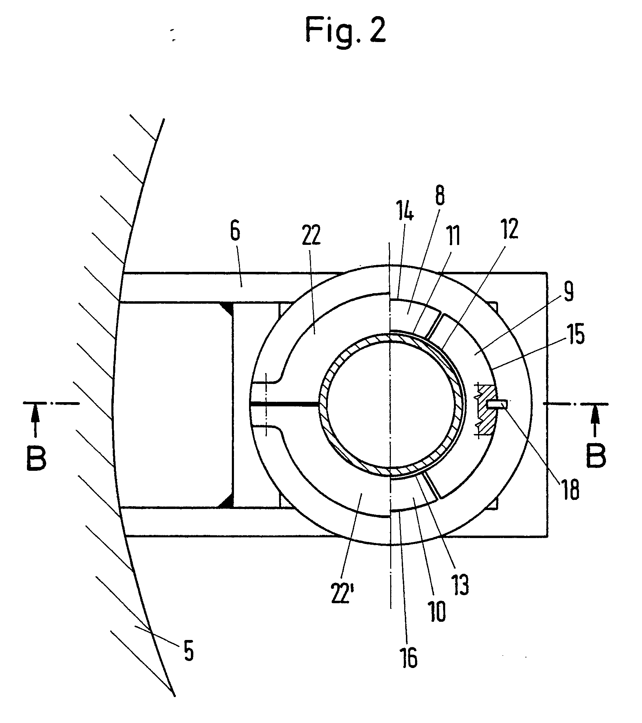

In Figur 2 kann man im Querschnitt den geteilten Anschlag 22, 22' erkennen, wobei in dieser Figur auf die Darstellung konstruktiver Einzelheiten der Ausgestaltung der Klemmringe verzichtet wurde. Die Teilung des Anschlages 22, 22' ist erforderlich, damit je nach den Dehnverhältnissen der Anschlag 22, 22' auf den entsprechenden Abstand 20 zur Oberkante 21 der Segmente 8, 9, 10 gesetzt werden kann. In diesem Ausführungsbeispiel sind drei symmetrisch ausgebildete Segmente 8, 9, 10 vorgesehen, es könnten ebensogut zwei oder vier sein. Dies ist abhängig von der Art und der gewünschten Anlage der Segmente 8, 9, 10 an die Außenoberfläche des Rohres 1 und von der Steifigkeit der Konstruktion. Alternativ ist auch die Anordnung einer hier nicht dargestellten in Längsrichtung geschlitzten Kegelhülse als Klemmelement möglich. Der in dieser Figur zu erkennende Stift 18 ist ein einfacher Scherstift, der in eine entsprechende Bohrung in das jeweilige Segment 9 eingeschlagen wird. Auf die detaillierte Darstellung des darunterliegenden Stiftes 19 wurde verzichtet, da gegen eine Feder eindrückbare Stifte hinlänglich bekannt sind.

## Ansprüche

1. Abfangvorrichtung zum sicheren Abfangen einer in einem Bergwerksschacht freihängenden Rohrleitung, die aus mit Muffen verschraubten Rohren besteht, wobei die Rohrleitung über Verlagerungselemente an der Schachtwand befestigt ist, dadurch gekennzeichnet, daß zumindest eine Abfangevorrichtung vorgesehen ist, die auf einer im Bereich der Schachtsohle vorgesehenen Verlagerung (6) angeordnet ist, bestehend aus einem quer zur Rohrleitungsachse liegenden Ring (4) mit nach unten hin sich verjüngender konischer Bohrung (7) deren kleinster Durchmesser größer als der Außendurchmesser der Muffe ist,

bestehend aus einem zwischen der Bohrung des Ringes (4) und der Außenoberfläche der Rohrleitung vorgesehenen Klemmring, dessen Segmente (8, 9, 10) sich in Rohrachsrichtung erstrecken, dessen Innenfläche (11, 12, 13) zylindrisch und dessen Außenfläche (14, 15, 16), der Bohrung des Ringes (4) angepaßt, konisch ausgebildet ist, dessen axiale Erstreckung größer als jene des Ringes (4) und dessen Innendurchmesser größer als jener des Außendurchmessers des Rohres (1) ist, sowie bestehend aus einem oberhalb des Klemmelementes in einem, die Formänderungen der Rohrleitung berücksichtigenden, einstellbaren axialen Abstand geteilten ringförmigen, das Rohr (1) kraftschlüssig umfassenden Anschlag (22, 22'), von dem im Abfangefall die Segmente des Klemmelementes zur Erzeugung einer Reibungskraft mit dem Rohr (1) in den Ring (4) drückbar sind.

2. Vorrichtung nach Anspruch 1,
dadurch gekennzeichnet,
daß im Einbauzustand die Einstecktiefe des Klemmelementes im Ring (4) mindestens gleich oder etwas größer ist als die Dicke des Ringes (4) und das Klemmelement in dieser Lage fixierbar ist.

3. Vorrichtung nach Anspruch 2,
dadurch gekennzeichnet,
daß zur Fixierung in dem Klemmelement mindestens ein quer zur Achse der Rohrleitung liegendes Anschlagmittel (18, 19) angeordnet ist.

4. Vorrichtung nach Anspruch 1,
dadurch gekennzeichnet,
daß der einstellbare Abstand (20) zwischen der oberen Stirnfläche (21) des Klemmelemtes und der unteren Stirnfläche des Anschlages (22, 22') mindestens gleich oder etwas größer ist als die maximal sich ergebende zusätzliche Dehnung der Rohrleitung infolge Erwärmung und Füllung der Rohrleitung.

5. Vorrichtung nach Anspruch 1,
dadurch gekennzeichnet,
daß die Innenfläche (11, 12, 13) des Klemmelementes profiliert ist.

6. Vorrichtung nach den Ansprüchen 1 bis 5,
dadurch gekennzeichnet,
daß das Klemmelement eine in Längsrichtung geschlitzte Kegelhülse ist.'

7. Vorrichtung nach den Ansprüchen 1 bis 5,
dadurch gekennzeichnet,
daß das Klemmittel mindestens zwei oder mehrere ringförmige Segmente (8, 9, 10) aufweist.

8. Vorrichtung nach Anspruch 1,
dadurch gekennzeichnet,
daß die Abmessung und die Elastizität des Ringes (40) so aufeinander abgestimmt sind, daß das Gesamtgewicht der fallenden Rohrleitung einschließlich der Füllung durch eine elastische oder plastische Verformung des Ringes (4) ohne Bruch aufnehmbar ist.

# Fig.1

# Fig. 2

Europäisches
Patentamt

**EUROPÄISCHER RECHERCHENBERICHT**

Nummer der Anmeldung

EP 90 25 0139

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 945 640 (DEUTSCHE BABCOCK) <br> * Insgesamt * <br> ----- | 1 | E 21 D 7/00 <br> F 16 L 3/18 |
| | | | **RECHERCHIERTE SACHGEBIETE (Int. Cl.5)** <br><br> E 21 D <br> F 16 L |

Der vorliegende Recherchenbericht wurde für alle Patentansprüche erstellt

| Recherchenort | Abschlußdatum der Recherche | Prüfer |
|---|---|---|
| DEN HAAG | 11-09-1990 | RAMPELMANN J. |

EPO FORM 1503 03.82 (P0403)